# EUROPEAN PATENT SPECIFICATION

(11) **EP 2 966 427 B1**
(45) Date of publication and mention of the grant of the patent: **26.09.2018**
(21) Application number: 14176748.3
(22) Date of filing: 11.07.2014
(51) Int. Cl.: G01K 17/06, G01F 15/14

(54) **Battery powered metering device**
Batteriebetriebener Zähler
Dispositif de dosage alimenté par batterie

(43) Date of publication of application: 13.01.2016
(73) Proprietor: INTEGRA Metering AG, 4106 Therwil (CH)
(72) Inventor: Durmeier, Franz, 79591 Eimeldingen (DE); Lang, Arno, 79379 Müllheim (DE); Roth, Jörg, 79540 Lörrach (DE)
(74) Representative: Troesch Scheidegger Werner AG

(56) References cited:
- EP-A1- 0 616 201
- EP-A1- 2 336 732
- CN-Y- 201 016 750
- JP-A- 2012 078 231

## Description

### TECHNICAL FIELD OF THE INVENTION

The present invention concerns a battery powered metering device, in particular a water meter and/or a thermal energy meter, and a method for operating a battery powered metering device.

### SUMMARY OF THE INVENTION

Metering devices with electronics for metering water or thermal energy are well known in the prior art, e.g. EP 2336732 A1. These devices often comprise an electronic circuit with a battery as power supply, both being sealed to protect the electrical parts from humidity. However, the periodic replacement of these batteries causes considerable maintenance costs.

The present invention has the objective to propose an improved battery powered metering device, in particular a water meter and/or a thermal energy meter, and an improved method for operating a battery powered metering device.

This objective is reached by a metering device comprising the features specified in claim 1. Further embodiments of the metering device, a method according to the invention and further embodiments of the method are specified in the further claims.

The invention concerns a battery powered metering device, also called metering instrument, in particular a water meter and/or a thermal energy meter. The metering device comprises a first unit and adjacent thereto a second unit, wherein the first unit comprises an electronic circuit and a fluid passage for a fluid to be measured and the second unit comprises a battery compartment for containing a battery as power supply to the electronic circuit. The battery compartment comprises an opening for transferring the battery between the interior of the battery compartment and the exterior of the metering device and the opening is covered by a removable lid, which provides a gas tight covering of the battery compartment. The first unit and the second unit are elongated and oriented substantially parallel to each other. This way an efficient, reliable and convenient replacement of the battery and hence a significant reduction of the maintenance costs is achieved.

The term "battery" includes all kind of energy sources, for example conventional batteries such as single-use or rechargeable batteries or energy generating sources such as fuel-cells. Further, the term "replacement" includes all kind of activities such as removing, inserting and testing the batteries.

Surprisingly, the solution according to the invention achieves a significant reduction of the maintenance costs, especially when the metering device is operated in a humid environment, which bears the risk of water effecting the operation of the electronic circuit and the battery.

Batteries can be rather uncontrollable components, in particular with respect to life time condition and/or testing performance of the battery. For example, the indications concerning the life time of the battery relate to assumed or actual measured boundary conditions, which may deviate from the actual operation conditions.

For this reason, the battery powered metering devices known from the prior art may have reduced periods of operation, which generally leads to increased maintenance costs. Thus, the invention provides the possibility to easily access the batteries from the outside of the metering device without need to open or even disassemble the metering device.

In an embodiment of the metering device according to the invention, the removable lid is coupled to the battery compartment by a bayonet coupling. This way a particularly efficient replacement is achieved, in particular without need to use tools.

In a further embodiment of the metering device according to the invention, the first unit and/or the second unit, in particular the battery compartment, is substantially tube shaped.

In a further embodiment of the metering device according to the invention, the first unit and the second unit are substantially tube shaped. The term elongated indicates that there exists a dominant main diameter of the unit, for example the length of a tube shaped body. This way a very compact and robust metering device is achieved.

In one example, the first part and the second part form a substantially double tube shaped body.

In a further embodiment of the metering device according to the invention, the surface of the metering device comprises a depression and/or a groove, which is located between the first unit and the second unit, and which in particular is oriented substantially parallel to the direction of the fluid passage and/or the battery compartment.

In a further embodiment of the metering device according to the invention, the fluid passage is substantially tube shaped with a diameter in the range of 1/4 inch to 3 inch, in particular 1/2 inch to 2 inch, further in particular 3/4 inch to 5/4 inch. The first unit with the fluid passage is also known as flow-through unit.

In a further embodiment of the metering device according to the invention, the first unit and/or the second unit is a part of a housing with an interior space or part of a filled body, in particular a molded body.

In one example, the first unit comprises a display unit, in particular a display screen, wherein in particular the fluid passage is arranged between the display unit and the second unit.

In a further embodiment of the metering device according to the invention, the removable lid and/or the second unit comprise means for sealing the removable lid in place, in particular means for applying a wire sealing.

In a further embodiment of the metering device according to the invention, the electronic circuit is configured to evaluate a measurement signal of the metering device, in particular by sensor signal processing and/or data calculation.

Further, the invention concerns a method for operating a battery powered metering device as in claim 11.

In an embodiment of the method according to the invention, the step of transferring the battery concerns a single-use or a rechargeable battery, in particular a Li-ion battery. In a further embodiment of the method according to the invention, the step of removing the lid and/or closing the battery compartment comprises disengaging respectively engaging a bayonet coupling.

In a further embodiment of the method according to the invention, the method further comprises the step of sealing the lid in place, in particular by using a wire sealing and/or a sticker. This provides the possibility to detect or prevent unauthorized manipulations of the metering device.

### BRIEF DESCRIPTION OF THE DRAWINGS

Below, the present invention is described in more detail by means of exemplary embodiments and the included simplified drawings. It is shown in:
- Fig. 1: a perspective view schematically illustrating a water meter according to the invention with a closed battery compartment;
- Fig. 2: the water meter according to Fig. 1 with an opened battery compartment and a battery removed from the battery compartment; and
- Fig. 3: the water meter according to Fig. 1 with the lid in a locked position.

### BRIEF DESCRIPTION OF THE INVENTION

The described embodiments are meant as illustrating examples and shall not confine the invention.

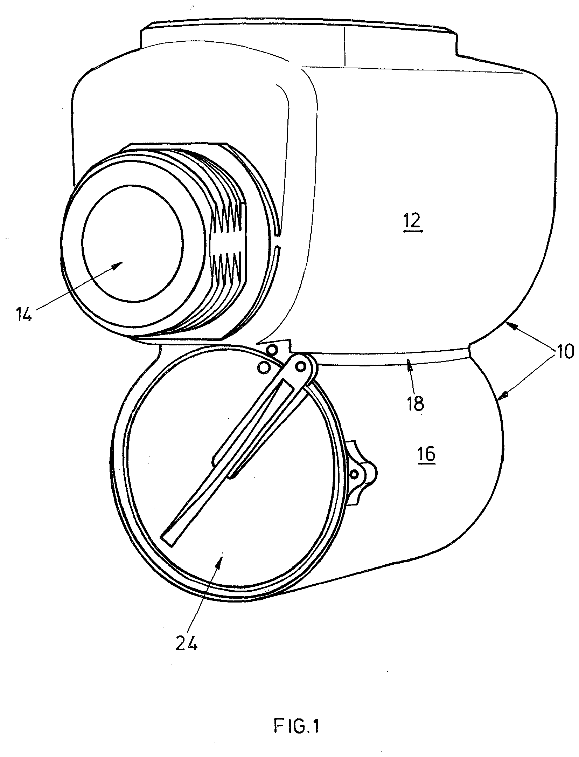

Fig. 1 shows a perspective view, which schematically illustrates a battery powered metering device according to the invention, in this example a water meter. Thus, in this example the fluid to be measured is water, but other liquids or mixtures of liquids could also be used.

The water meter comprises a housing 10 with an upper first part 12 and a lower second part 16, which is arranged below the first part 12. The first part 12 and the second part 16 are substantially tube shaped and aligned parallel to each other. The distinction between the first part 12 and the second part 16 is defined by two grooves 18 on each of the side walls of the housing. Thus, the metering device is substantially double-tube shaped.

The first part 12 comprises a tube shaped fluid passage 14 for the water to be measured. In this example, the diameter of the fluid passage 14 corresponds to the 1 inch standard diameter for water pipes. Further, the interior of the first part 12 comprises an electronic circuit (not shown), which evaluates the measurement signals from an internal sensor (not shown), i.e. in this case a water flow sensor, by performing the corresponding signal processing and data calculation.

The second part 16 comprises a battery compartment (not shown) for containing an internal battery, which for example can be a conventional single-use battery or a rechargeable Li-ion battery (not shown). This battery provides the power supply to the electronic circuit located in the upper first part 12.

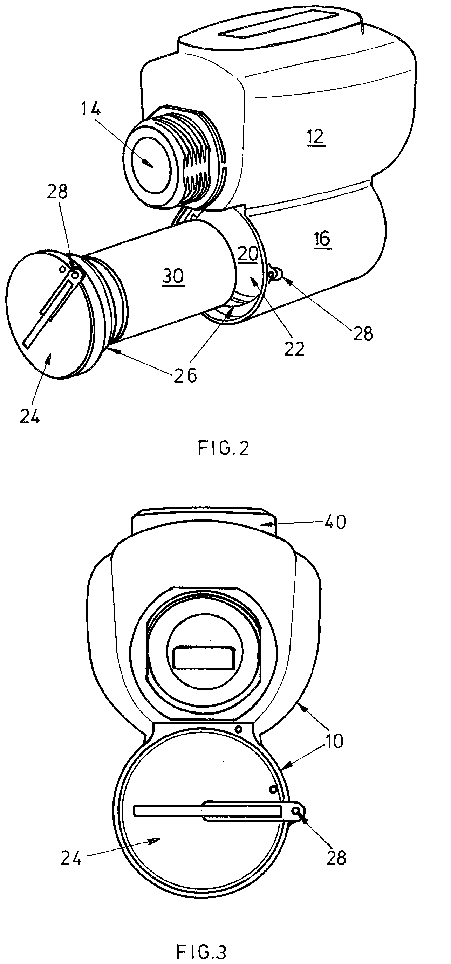

Further, the battery compartment comprises an opening (not shown). This opening is closed by a lid 24, therefore the battery compartment and the battery are invisible in the illustration of Fig. 2. However, these parts are further explained in the description of Fig. 2.

Fig. 2 shows the water meter according to Fig. 1 and additionally shows an opening 22, a battery compartment 20 and a single-use battery 30 as mentioned in the description of Fig. 1.

The opening 22, the battery compartment 20 and the battery 30 are visible because the lid 24 has been removed from the battery compartment 20, together with the battery 30, which has been transferred from the interior of the battery compartment 20 to the exterior of the metering device via the opening 22.

In this example, the battery 30 and the battery compartment 20 are tube shaped for convenient replacement of the battery 30. Further, the opening 22 and the second part 16 comprise a bayonet coupling 26, such that the lid 24 can conveniently be unlocked and removed from the battery compartment 20 by disengaging the bayonet coupling 26. Also the battery compartment 20 can conveniently be closed and locked by engaging the bayonet coupling 26.

In another example, a tube shaped rechargeable battery such as a Li-ion battery is used.

The lid 24 is gas tight, which makes the water meter particularly well suited for operation in humid environments. Despite being gas tight, the metering device according to the invention allows for an easy replacement of the battery 30 und therefore reduced maintenance costs.

Often, the quality and/or reliability of batteries varies significantly. For example in a batch of batteries 99% of this batch may be in good condition, whereas 1% of this batch does not perform with the rated capacity. It is well known that the testing of the batteries prior to their operation is time consuming and requires considerable effort. The testing is often accomplished by a simple and rather unreliably voltage measurement. Further, it is not advisable to measure the actual capacity of the battery during operation, because such a measurement applies a load to the battery and shortens its life time. For this reason, models are often used for determining the lifetime of the battery.

The present invention provides a solution for reducing the maintenance costs for battery powered metering devices by providing a battery compartment, which allows for an easy access of the batteries from the outside of the metering device without the need to open the housing of the metering device and/or exposing the electronic circuit. This considerably improves reliability and reduces the above mentioned problems.

Fig. 3 shows the water meter according to Fig. 1, with the lid 24 in a closed and locked position, i.e. the lid 24 is locked to the battery compartment by engaging a bayonet coupling.

Further, the lower part 12 as well as the lid 24 comprise a loop with a trough hole 28 (only one shown) for sealing the lid 24 in place. In the locked position as shown, both trough holes 28 are mutually aligned, such that a wire sealing can easily be applied by pulling the wire of the sealing through both trough holes 28.

Further, the housing comprises a display unit 40 on top of the upper first part of the housing 10 and the lower second part of the housing 10 with the battery compartment is arranged on the side opposite to the display unit 40 with respect to the fluid passage of the first part. This way, the fluid passage 14 (Fig. 1) of the metering device is situated between the battery compartment and the display unit 40. Thus, a compact, robust and conveniently usable measuring device is achieved.

## Claims

1. A battery powered metering device, in particular a water meter and/or a thermal energy meter, with a housing comprising a first unit (12) and adjacent thereto a second unit (16), the first unit (12) comprising an electronic circuit and a fluid passage (14) for a fluid to be measured and the second unit (16) comprising a battery compartment (20) for containing a battery (30) as power supply to the electronic circuit, wherein the battery compartment (20) comprises an opening (22) for transferring the battery (30) between the interior of the battery compartment (20) and the exterior of the metering device and the opening (22) is covered by a removable lid (24),
**characterized in that** the first unit (12) and the second unit (16) are elongated and oriented substantially parallel to each other and the removable lid (24) provides a gas tight covering of the battery compartment (20).

2. The metering device according to claim 1, wherein the removable lid (24) is coupled to the battery compartment (20) by a bayonet coupling (26).

3. The metering device according to claim 1 or 2, wherein the first unit (12) and/or the second unit (16), in particular the battery compartment (20), is substantially tube shaped.

4. The metering device according to any one of the previous claims, wherein the first unit (12) and the second unit (16) are substantially tube shaped.

5. The metering device according to any one of the previous claims, wherein the surface of the metering device comprises a depression and/or a groove (18), which is located between the first unit (12) and the second unit (16), and which in particular is oriented substantially parallel to the direction of the fluid passage (14) and/or the battery compartment (20).

6. The metering device according to any one of the previous claims, wherein the fluid passage (14) is substantially tube shaped with a diameter in the range of 6.35 mm to 76.2 mm, in particular 12.7 mm to 50.8 mm, further in particular 19.05 mm to 31.75 mm.

7. The metering device according to any one of the previous claims, wherein the first unit (12) and/or the second unit (16) is a part of a housing (10) with an interior space or a part of a filled body, in particular a molded body.

8. The metering device according to any one of the previous claims, wherein the first unit (12) comprises a display unit (40), in particular a display screen, wherein in particular the fluid passage (14) is arranged between the display unit (40) and the second unit (16).

9. The metering device according to any one of the previous claims, wherein the removable lid (24) and/or the second unit (16) comprise means (28) for sealing the removable lid (24) in place, in particular means for applying a wire sealing.

10. The metering device according to any one of the previous claims, wherein the electronic circuit is configured to evaluate a measurement signal of the metering device, in particular by sensor signal processing and/or data calculation.

11. A method for operating a battery powered metering device, in particular a water meter and/or a thermal energy meter, which comprises a first unit (12) and adjacent thereto a second unit (16), the first unit (12) comprising an electronic circuit and a fluid passage (14) for a fluid to be measured and the second unit (16) comprising a battery compartment (20) with a lid (24) for containing a battery (30) as power supply to the electronic circuit of the metering device, the first unit (12) and the second unit (16) being elongated and oriented substantially parallel to each other, the method comprising the steps of:
- removing the lid (24) from the battery compartment (20) to provide an opening (22) of the battery compartment (20);
- transferring a battery (30) between the interior of the battery compartment (20) and the exterior of the metering device; and
- closing the battery compartment (20) by gas tight mounting the lid (24) onto the battery compartment (20) .

12. The method according to claim 11, wherein the step of transferring the battery (30) concerns a single-use or a rechargeable battery, in particular a Li-ion battery.

13. The method according to claim 11 or 12, wherein the step of removing the lid and/or closing the battery compartment (20) comprises disengaging respectively engaging a bayonet coupling (26).

14. The method according to any one of claims 11 to 13, further comprising the step of sealing the lid (24) in place, in particular by using a wire sealing and/or a sticker.

## Patentansprüche

1. Batteriebetriebener Zähler, insbesondere ein Wasserzähler und/oder ein Wärmezähler, mit einem Gehäuse, das eine erste Einheit (12) und benachbart dazu eine zweite Einheit (16) umfasst, wobei die erste Einheit (12) eine elektronische Schaltung und einen Fluiddurchlass (14) für ein zu messendes Fluid umfasst und die zweite Einheit (16) ein Batteriefach (20) zur Aufnahme einer Batterie (30) als Energieversorgung für die elektronische Schaltung umfasst, wobei das Batteriefach (20) eine Öffnung (22) zum Überführen der Batterie (30) zwischen dem Innenbereich des Batteriefachs (20) und dem Außenbereich des Zählers umfasst und die Öffnung (22) durch einen abnehmbaren Deckel (24) abgedeckt ist,
**dadurch gekennzeichnet, dass** die erste Einheit (12) und die zweite Einheit (16) länglich und im Wesentlichen parallel zueinander ausgerichtet sind und der abnehmbare Deckel (24) eine gasdichte Abdeckung des Batteriefachs (20) bereitstellt.

2. Zähler nach Anspruch 1, wobei der abnehmbare Deckel (24) mittels einer Bajonettverbindung (26) mit dem Batteriefach (20) verbunden ist.

3. Zähler nach Anspruch 1 oder 2, wobei die erste Einheit (12) und/oder die zweite Einheit (16), insbesondere das Batteriefach (20), im Wesentlichen rohrförmig ist.

4. Zähler nach einem der vorstehenden Ansprüche, wobei die erste Einheit (12) und die zweite Einheit (16) im Wesentlichen rohrförmig sind.

5. Zähler nach einem der vorstehenden Ansprüche, wobei die Oberfläche des Zählers eine Vertiefung und/oder eine Nut (18) umfasst, die sich zwischen der ersten Einheit (12) und der zweiten Einheit (16) befindet und die insbesondere im Wesentlichen parallel zu der Richtung des Fluiddurchlasses (14) und/oder des Batteriefachs (20) ausgerichtet ist.

6. Zähler nach einem der vorstehenden Ansprüche, wobei der Fluiddurchlass (14) im Wesentlichen rohrförmig mit einem Durchmesser im Bereich von 6,35 mm bis 76,2 mm, insbesondere 12,7 mm bis 50,8 mm, weiter insbesondere 19,05 mm bis 31,75 mm, ist.

7. Zähler nach einem der vorstehenden Ansprüche, wobei die erste Einheit (12) und/oder die zweite Einheit (16) ein Teil eines Gehäuses (10) mit einem Innenraum oder ein Teil eines gefüllten Körpers, insbesondere eines gegossenen Körpers, ist.

8. Zähler nach einem der vorstehenden Ansprüche, wobei die erste Einheit (12) eine Anzeigeeinheit (40), insbesondere einen Bildschirm, umfasst, wobei insbesondere der Fluiddurchlass (14) zwischen der Anzeigeeinheit (40) und der zweiten Einheit (16) angeordnet ist.

9. Zähler nach einem der vorstehenden Ansprüche, wobei der abnehmbare Deckel (24) und/oder die zweite Einheit (16) Mittel (28) zum Versiegeln des abnehmbaren Deckels (24) an Ort, insbesondere Mittel zum Anbringen einer Drahtversiegelung, umfassen.

10. Zähler nach einem der vorstehenden Ansprüche, wobei die elektronische Schaltung konfiguriert ist, um ein Messsignal des Zählers auszuwerten, insbesondere durch Sensorsignalverarbeitung und/oder Datenberechnung.

11. Verfahren zum Betrieb eines batteriebetriebenen Zählers, insbesondere eines Wasserzählers und/oder eines Wärmezählers, der eine erste Einheit (12) und benachbart dazu eine zweite Einheit (16) umfasst, wobei die erste Einheit (12) eine elektronische Schaltung und einen Fluiddurchlass (14) für ein zu messendes Fluid umfasst und die zweite Einheit (16) ein Batteriefach (20) mit einem Deckel (24) zur Aufnahme einer Batterie (30) als Energieversorgung für die elektronische Schaltung des Zählers umfasst, wobei die erste Einheit (12) und die zweite Einheit (16) länglich und im Wesentlichen parallel zueinander ausgerichtet sind, wobei das Verfahren die folgenden Schritte umfasst:
- Entfernen des Deckels (24) von dem Batteriefach (20), um eine Öffnung (22) des Batteriefachs (20) bereitzustellen;
- Überführen einer Batterie (30) zwischen dem Innenbereich des Batteriefachs (20) und dem Außenbereich des Zählers; und
- Schließen des Batteriefachs (20) durch gasdichtes Befestigen des Deckels (24) auf dem Batteriefach (20).

12. Verfahren nach Anspruch 11, wobei der Schritt des Überführens der Batterie (30) eine Einweg- oder eine wiederaufladbare Batterie, insbesondere eine Li-Ionen-Batterie betrifft.

13. Verfahren nach Anspruch 11 oder 12, wobei der Schritt des Entfernens des Deckels und/oder Schließens des Batteriefachs (20) das Lösen beziehungsweise Ineingriffbringen einer Bajonettverbindung (26) umfasst.

14. Verfahren nach einem der Ansprüche 11 bis 13, weiter umfassend den Schritt des Versiegelns des Deckels (24) an Ort, insbesondere unter Verwendung einer Drahtversiegelung und/oder eines Aufklebers.

## Revendications

1. Dispositif de mesure alimenté par batterie, en particulier un compteur d'eau et/ou un compteur d'énergie thermique, avec un boîtier comprenant une première unité (12) et, adjacente à celle-ci, une deuxième unité (16), la première unité (12) comprenant un circuit électronique et un passage de fluide (14) pour un fluide à mesurer, et la deuxième unité (16) comprenant un compartiment de batterie (20) pour contenir une batterie (30) comme alimentation du circuit électronique, dans lequel le compartiment de batterie (20) comprend une ouverture (22) pour transférer la batterie (30) entre l'intérieur du compartiment de batterie (20) et l'extérieur du dispositif de mesure et l'ouverture (22) est recouverte par un couvercle amovible (24),
**caractérisé en ce que** la première unité (12) et la deuxième unité (16) sont allongées et orientées sensiblement parallèles entre elles, et **en ce que** le couvercle amovible (24) fournit une enveloppe étanche aux gaz au compartiment de batterie (20).

2. Dispositif de mesure selon la revendication 1, dans lequel le couvercle amovible (24) est couplé au compartiment de batterie (20) par un raccord à baïonnette (26).

3. Dispositif de mesure selon la revendication 1 ou 2, dans lequel la première unité (12) et/ou la deuxième unité (16), en particulier le compartiment de batterie (20), est sensiblement en forme de tube.

4. Dispositif de mesure selon l'une des revendications précédentes, dans lequel la première unité (12) et la deuxième unité (16) sont sensiblement en forme de tube.

5. Dispositif de mesure selon l'une des revendications précédentes, dans lequel la surface du dispositif de mesure comprend un creux et/ou une rainure (18), qui est situé(e) entre la première unité (12) et la deuxième unité (16) et qui est en particulier orienté(e) sensiblement parallèle au sens du passage de fluide (14) et/ou au compartiment de batterie (20).

6. Dispositif de mesure selon l'une des revendications précédentes, dans lequel le passage de fluide (14) est sensiblement en forme de tube, avec un diamètre compris dans la plage allant de 6,35 mm à 76,2 mm, en particulier de 12,7 mm à 50,8 mm, plus particulièrement de 19,05 mm à 31,75 mm.

7. Dispositif de mesure selon l'une des revendications précédentes, dans lequel la première unité (12) et/ou la deuxième unité (16) fait partie d'un boîtier (10) avec un espace intérieur, ou fait partie d'un corps plein, en particulier un corps moulé.

8. Dispositif de mesure selon l'une des revendications précédentes, dans lequel la première unité (12) comprend une unité d'affichage (40), en particulier un écran, dans lequel en particulier le passage de fluide (14) est agencé entre l'unité d'affichage (40) et la deuxième unité (16).

9. Dispositif de mesure selon l'une des revendications précédentes, dans lequel le couvercle amovible (24) et/ou la deuxième unité (16) comprend des moyens (28) pour étanchéifier le couvercle amovible (24) en place, en particulier des moyens pour appliquer un fil de soudure.

10. Dispositif de mesure selon l'une des revendications précédentes, dans lequel le circuit électronique est configuré pour évaluer un signal de mesure du dispositif de mesure, en particulier par traitement du signal de capteur et/ou par calcul de données.

11. Procédé pour faire fonctionner un dispositif de mesure alimenté par batterie, en particulier un compteur d'eau et/ou un compteur d'énergie thermique, qui comprend une première unité (12) et, adjacente à celle-ci, une deuxième unité (16), la première unité (12) comprenant un circuit électronique et un passage de fluide (14) pour un fluide à mesurer, et la deuxième unité (16) comprenant un compartiment de batterie (20) avec un couvercle (24) pour contenir une batterie (30) comme alimentation du circuit électronique du dispositif de mesure, la première unité (12) et la deuxième unité (16) étant allongées et orientées sensiblement parallèles entre elles, le procédé comprenant les étapes consistant à :
- retirer le couvercle (24) du compartiment de batterie (20) pour fournir une ouverture (22) du compartiment de batterie (20) ;
- transférer une batterie (30) entre l'intérieur du compartiment de batterie (20) et l'extérieur du dispositif de mesure ; et
- fermer le compartiment de batterie (20) en montant de façon étanche aux gaz le couvercle (24) sur le compartiment de batterie (20).

12. Procédé selon la revendication 11, dans lequel l'étape consistant à transférer la batterie (30) concerne une batterie à usage unique ou rechargeable, en particulier une batterie Li-ion.

13. Procédé selon la revendication 11 ou 12, dans lequel l'étape consistant à retirer le couvercle et/ou à fermer le compartiment de batterie (20) consiste à respectivement désengager et engager un raccord à baïonnette (26).

14. Procédé selon l'une des revendications 11 à 13, comprenant en outre l'étape consistant à étanchéifier le couvercle (24) en place, en particulier en utilisant un fil de soudure et/ou un autocollant.
